# EUROPEAN PATENT APPLICATION

(11) **EP 1 329 802 A2**
(43) Date of publication of application: **23.07.2003**
(21) Application number: 03250221.3
(22) Date of filing: 14.01.2003
(51) Int. Cl.: G06F 3/12

(54) **Printer driver**

(30) Priority: 21.01.2002 JP 2002011687
(71) Applicant: STAR MICRONICS CO., LTD., Shizuoka-shi, Shizuoka (JP)
(72) Inventor: Kennis, Albert, Shizuoka-shi, Shizuoka (JP)
(74) Representative: Skone James, Robert Edmund

(57) **Abstract**

A printer driver (50) has an image coupling engine (54) that prepares a coupled image by adding a message image to an original image. The coupled image may be printed immediately after the original image is printed, or may be stored in a predetermined file and printed as needed. The original image is printed as an original and the coupled image is printed as a copy. The original and the copy can be easily distinguished because the message image is added to the copy.

## Description

The present invention relates to a printer driver, particularly to a printer driver for performing duplex printing.

Conventionally, duplex printing is performed using a dot-matrix printer. The dot-matrix printer comprises a plurality of pins for striking against a ribbon to print on a plurality of pressure-sensitive papers that are set in the dot-matrix printer. In case where a retailer employs duplex printing for the sales management, the first sheet of a two-page form is given to a customer as an original receipt, and the retailer keeps and files the second sheet as a journal copy. Since the colors of the first and second sheets of the two-page form generally differ, the original and the copy are easily distinguished.

On the other hand, a thermal printer is superior in printing speed, noise reduction and reliability compared with the dot-matrix printer. Also, the thermal printer does not require an ink ribbon. Further, setting of papers is easy in the thermal printer. Thus, the thermal printer is easy to use for the user.

Since the thermal printer does not employ a printing method of striking, the thermal printer cannot perform duplex printing using the two-page form. Two sheets may be adjacently arrayed in width direction thereof and set in the thermal printer to use one sheet as an original and another sheet as the copy. In this case, however, the amount of printing is doubled and the size of the printer is increased to allow adjacently arraying two sheets. As a result, the thermal printers have not previously been employed for transactions for which the preparation of copies is required.

An object of the present invention is to provide a printer driver that enables duplex printing without using two-page forms.

According to a first aspect of the present invention, there is provided a printer driver for use with a host computer, the printer driver comprising:
reception means for receiving original data;
storage means for storing message data; and
coupling means for coupling the original data with the message data to prepare coupled data.

The coupling means may couple an original data concerning a product price with a message data indicating that a printed sheet is a copy. A predetermined message for clearly distinguishing an original and a copy can be easily added to the original data without altering the printer or an application installed in the host computer. It is preferable that the coupling means selectively couple the original data with the message data. This enables coupling of the data to be performed when required, and coupling of the data to be skipped when not required. That is, copies can be generated as needed.

The printer driver may further comprise:
selection means for outputting the original data to a printer connected to the host computer and for selectively outputting the coupled data to the printer or to a memory of the host computer.

With this configuration, an original image is printed based on the original data, and duplicate printing is performed based on the coupled data when the coupled data is output to the printer. Since the coupled data is obtained by adding the message data to the original data, a message image corresponding to the message data is printed in addition to the original data when duplicate printing is performed. In case where the coupled data is stored in the memory, the coupled data need not be printed for each transaction, and can collectively be printed, as needed, as journal data.

Preferably, the printer driver further comprises:
setting means for setting up a paper-cutting operation; and
output means for outputting the original data or the coupled data to the printer together with a command for the paper-cutting operation that is set up by the setting means,
wherein the setting means sets up the paper-cutting operation for each of an original printing and a duplicate printing on each page basis and on each document basis, and
the paper-cutting operation includes a full-cut operation and a partial-cut operation.

With this configuration, the paper-cutting operation can be set up for each page and for each document in printing of the original and the copy. In case where the full-cut operation is selected, a paper is completely cut between pages or documents. In case where the partial-cut operation is selected, only a predetermined portion of the paper between the pages or documents is cut. Different paper cutting operations may be employed for the original and the copy. This enables the original and the copy to be easily and clearly distinguished.

An example of a printer driver according to the present invention will now be described with reference to the accompanying drawings, in which:-
Fig. 1 is a block diagram showing a host computer for which a printer driver of the present invention is employed.
Fig. 2 is a schematic diagram showing a printer in Fig. 1.
Fig. 3 is a block diagram showing a configuration of software installed in the host computer.
Fig. 4(a) is a plan view of an original image.
Fig. 4(b) is a plan view of a SCV image.
Fig. 4(c) is a plan view of a journal image obtained by coupling the original image and the SCV image.
Fig. 5 is a plan view of a custom option setting screen for the printer driver.
Fig. 6 is a flowchart showing a data processing of the present invention.
Fig. 7 is a flowchart showing one part of the processing performed by the printer driver.
Fig. 8 is a flowchart showing the rest of the processing performed by the printer driver.
Fig. 9 is a diagram for explaining a coupling of an original image data with a SCV image data.
Fig. 10 is a flowchart showing a method for coupling the original image data with the SCV image data.

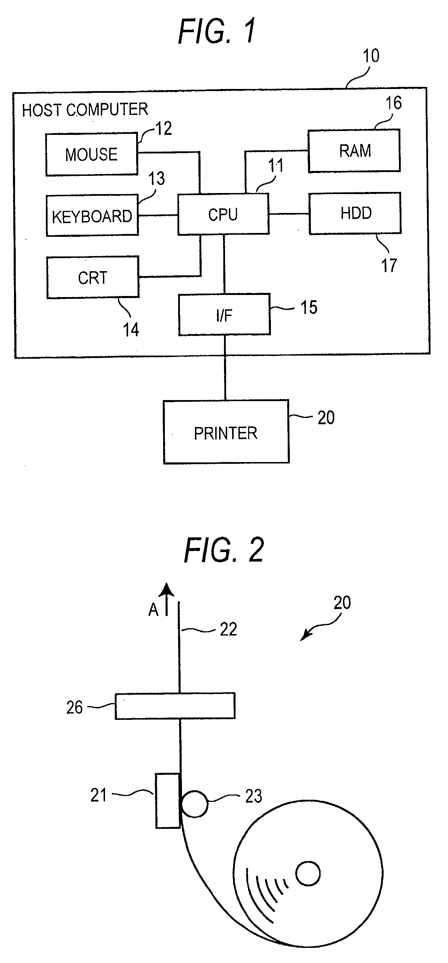

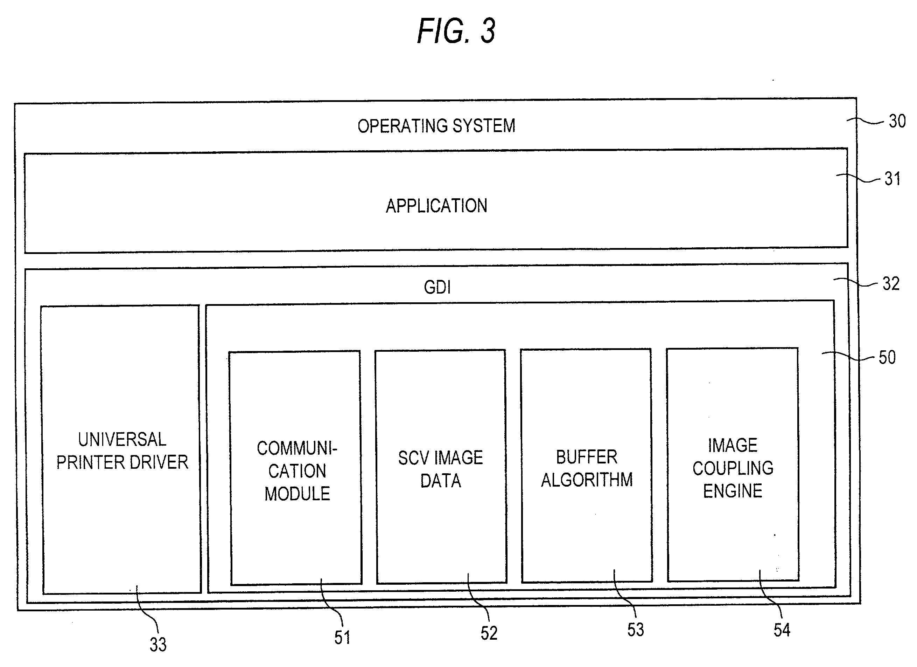

A printer driver 50 shown in Fig. 3 is a printing control program installed in a host computer 10 shown in Fig. 1, and is executed by the host computer 10. The host computer 10 comprises a CPU 11, a mouse 12, a keyboard 13, a CRT 14, an interface 15, a RAM 16, and a hard disk 17. The host computer 10 is connected to a printer 20 via the interface 15.

As shown in Fig. 2, the printer 20 comprises a thermal head 21, a platen 23, and an auto cutter 26. The printer 20 performs raster printing on a continuous recording sheet 22. The platen 23 is rotated by a paper feed mechanism (not shown), and conveys the continuous recording sheet 22 in a longitudinal direction A. During the raster printing, the continuous recording sheet 22 is conveyed in the longitudinal direction A and a dot line of the thermal head 21 is heated in synchronization with the rotation of the platen 23 to print a desired image. The auto cutter 26 selectively performs full cutting or partial cutting of the continuous recording sheet 22. A paper feed mechanism (not shown) conveys the paper forward and rearward to adjust a printing start position for the thermal head 21 and a paper cut position for the auto cutter 26.

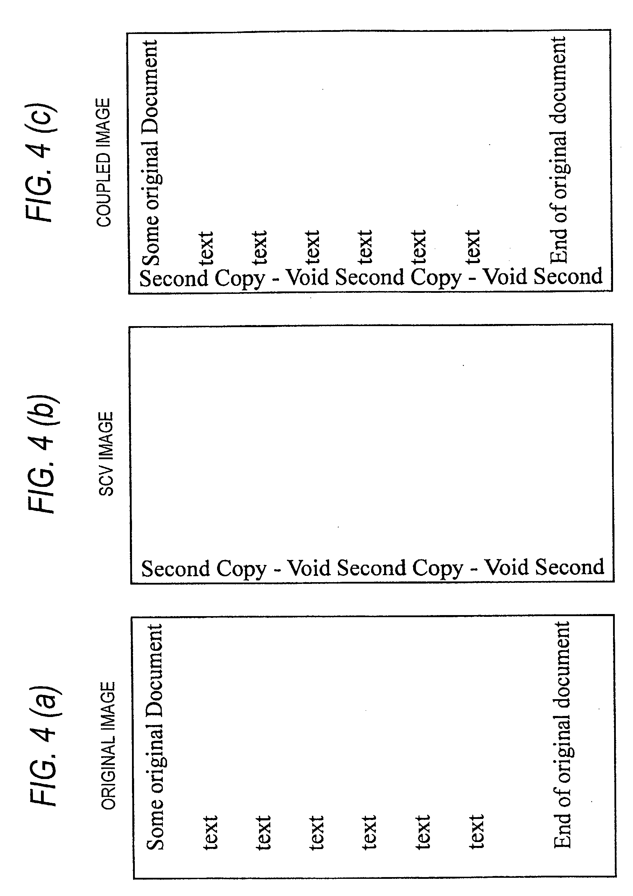

As shown in Fig. 3, an operating system (OS) 30, an application 31, a graphic device interface (GDI) 32 and a universal printer driver 33 are previously installed in the host computer 10, and Windows by MicroSoft Corp. maybe employed as the operating system 30. The application 31 prepares original data for an original image shown in Fig. 4(a). The original image may be a purchased product's name and price. The GDI 32 is a module that controls a graphics drawing related process for preparing graphics based on original data produced by the application 31.

The printer driver 50 installed in the host computer 10 is stored in the hard disk 17 (Fig. 1), and is loaded into the RAM 16 as needed. Various buffers and variables that will be described later are also prepared in the RAM 16. As shown in Fig. 3, the printer driver 50 comprises a communication module 51 for communicating with the universal printer driver 33, SCV image data 52 that is data related to a "Second Copy-Void" (SCV) message image shown in Fig. 4(b), a buffer algorithm 53 and an image coupling engine 54. The buffer algorithm 53 is used to store a storage location of an original image data, which will be described later. The image coupling engine 54 couples the SCV image data 52 with the original image data to obtain coupled image data. As an example, the message image "Second Copy-Void" (SCV image) is added to the original image shown in Fig. 4(a) to obtain the coupled image shown in Fig. 4(c).

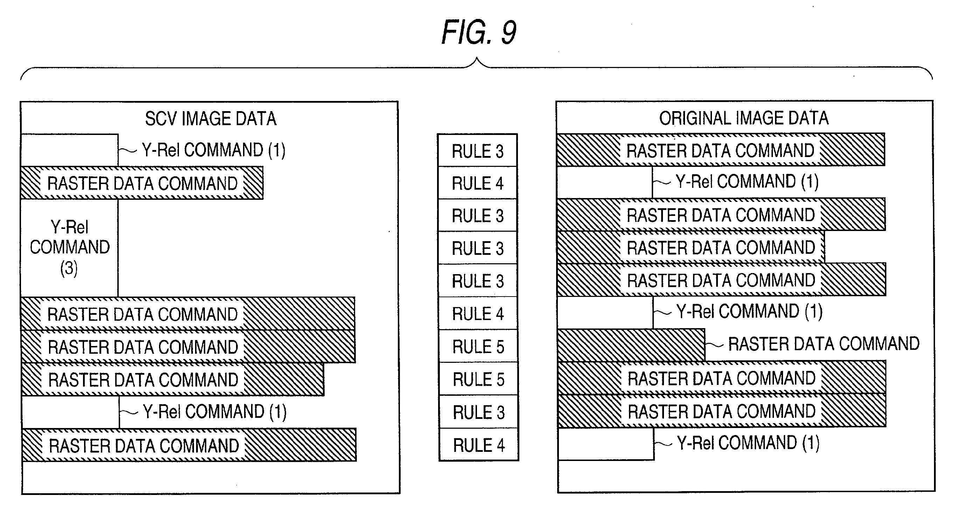

The SCV image data 52 is image data corresponding to the SCV image, and comprises multiple Y-Rel commands and raster data commands that correspond to the individual dot lines as shown in Fig. 9. A Y-Rel command is used when dots to be printed are not present along a corresponding dot line, i.e., it is used for an empty dot line, and for instructing paper scrolling. In case where a plurality of empty dot lines continue, a data representing the number of contiguous empty dot lines (hereinafter referred to as a "Y-Rel command count") is added to the Y-Rel command.

The raster data command is a command used when dots to be printed are present along a corresponding dot line, i.e., it is used for a dot line to be printed, and for designating corresponding dot data. In Fig. 9, the length of each raster data command differs, and is determined in accordance with the position of the rightmost print dot on a corresponding dot line.

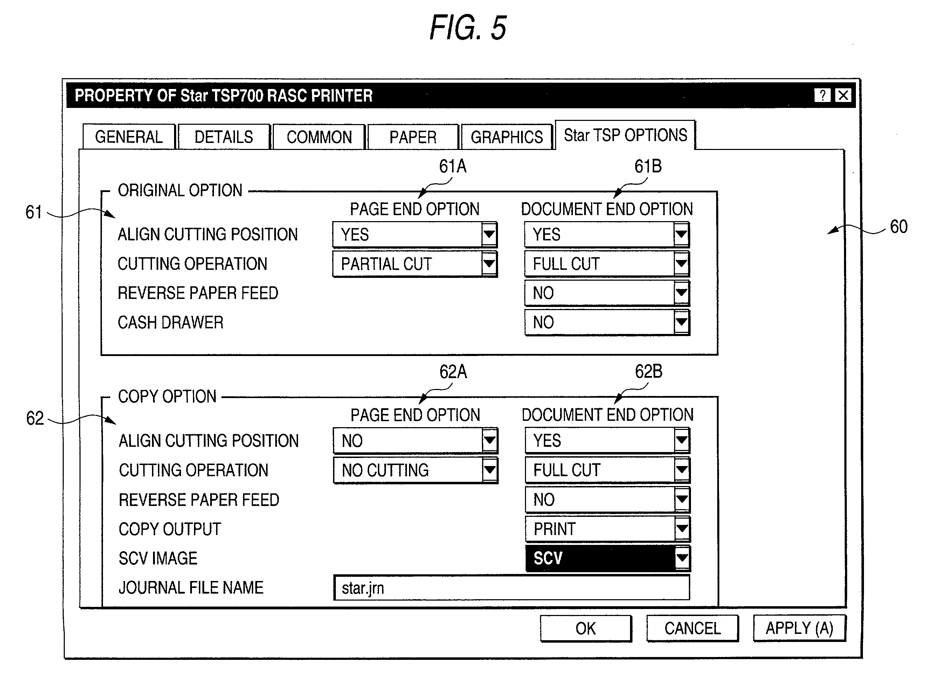

As shown in Fig. 5, a property option is prepared for the printer driver 50. The user can instruct the use of various setups on a custom property setting screen 60 that is displayed on the CRT 14 of the host computer 10. The custom property setting screen 60 is divided into an original option group 61 for setting printer functions during an original receipt printing, and a copy option group 62 for setting printer functions during a journal copy printing. An original receipt may be given to a customer, and a journal copy may be kept as a sales record by the retailer.

Since these two options are completely independent, any arbitrary combination can be set. Each group 61 or 62 includes a page end option 61A or 62A for setting printer functions for each page, and a document end option 61B or 62B for setting printer functions for each document. Setup data concerning a custom option are transmitted as custom operating data to the printer driver 50 and are employed for the printing performed by the printer 20.

The original receipt to be printed for each customer is referred to as a document. Each document may include one or more pages that may have either a fixed length or a variable length. In case where multiple pages are set up for the original receipt, normal transaction information may be printed on the first page and discount information may be printed on the second page. This enables the user to separate the second page from the first and use the second page as a discount voucher for a future purchase. For the journal copy, the SCV image may be selectively printed in addition to the original image. Table 1 shows setup entries, choices corresponding to the individual entries, and definitions thereof.

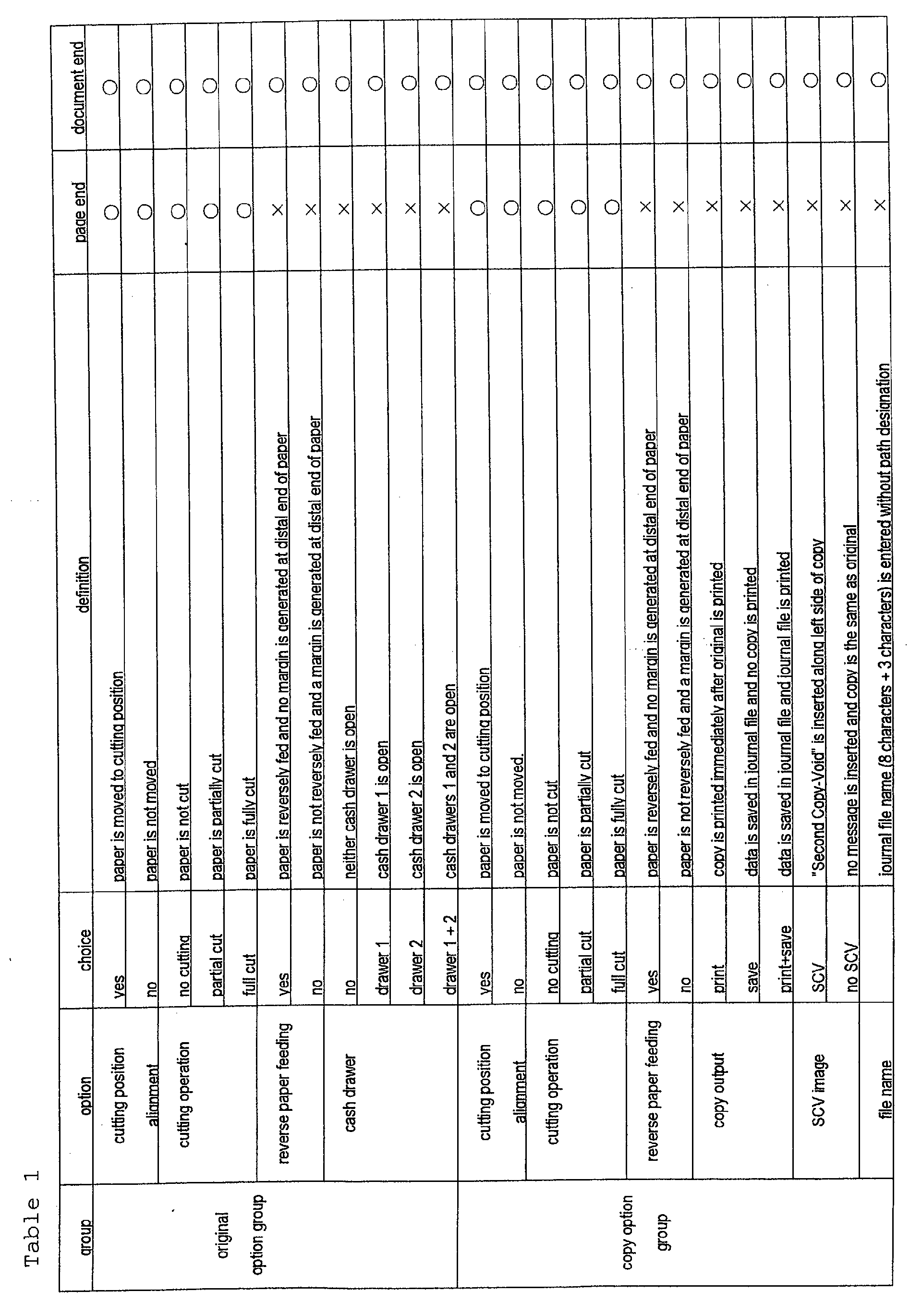

In the cutting position alignment option, a paper alignment at a time of paper cutting is set. As shown in Fig. 2, since the auto cutter 26 is located at a paper conveying direction downstream side with respect to the thermal head 21, the paper is cut in the middle of the printed portion if the paper cutting is performed immediately after the printing is completed. In case where "yes" is set for the cutting position alignment, the paper cutting is performed after all of a printed portion is moved along the paper conveying direction A beyond the auto cutter 26. This prevents the paper from being cut in the middle of the printed portion.

In the cutting operation option, an operation for cutting the paper at a page end or at a document end is selected. According to this operation, "full cutting" for completely cutting the paper, "partial cutting" for partially cutting the paper, or "no cutting" for not cutting the paper can be selected. In the reverse paper feeding operation, whether reverse paper feeding is required after the paper cutting can be selected. In case where printing is started immediately after the paper cutting, a margin is generated at the distal end of the paper. In case where the paper is rewound and an adjustment is made for the next printing start position, generation of an extra space can be prevented.

In the copy option group 62, the copy output option and the SCV image option can be set. In the copy output option, "print", "save" or "print + save" can be selected. In case where "print" is selected, the journal copy printing is begun immediately after the original receipt is printed. In case where "save" is selected, the journal copy is not printed immediately after the original receipt is printed, and image data for the journal copy is stored in a journal file. The journal file is stored for a predetermined period of time, such as one day, one week or a period of time required for the continuous recording sheet 22 to be exhausted. Thus, the data for the journal copy can be collectively printed when required by the user, such as when the total sales are calculated for one day. When "print + save" is selected, following the printing of the original receipt, the image data for the journal copy are stored in the journal file and printing of the journal copy is performed.

In case where "SCV" is selected for the SCV image option, "Second Copy-Void" is printed vertically along the left side of the journal copy as shown in Fig. 4(c). Thus, the original receipt and the journal copy can be easily identified. Even if the journal copy is erroneously handed to a third party, its use for an unauthorized purpose can be prevented.

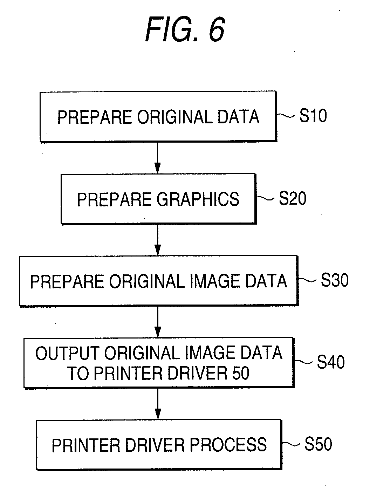

The generation of an original receipt and a journal copy will now be described. Fig. 6 is a flowchart for a processing performed for generating the original receipt and the journal copy.

First, the application 31 prepares original data representing transaction information (S10). This data corresponds to the original image in Fig. 4(a). Then, the GDI 32 generates graphics data based on the original data (S20) . In this example, text is also handled as graphics. The graphics are converted into a specific printer language by the universal printer driver 33 (S30) to generate the original image data. Together with other commands, the obtained original image data are sequentially output to the printer driver 50 as a data flow (S40), and the printer driver process is begun (S50). As shown in Fig. 9, the original image data that are prepared during this processing includes multiple Y-Rel commands and raster data commands, like the SCV image data.

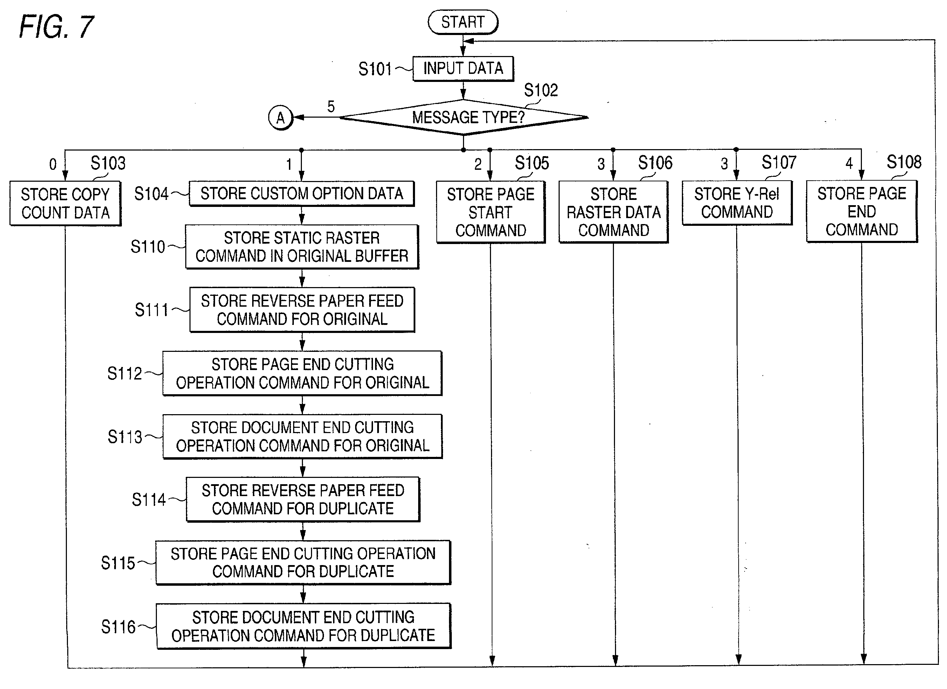

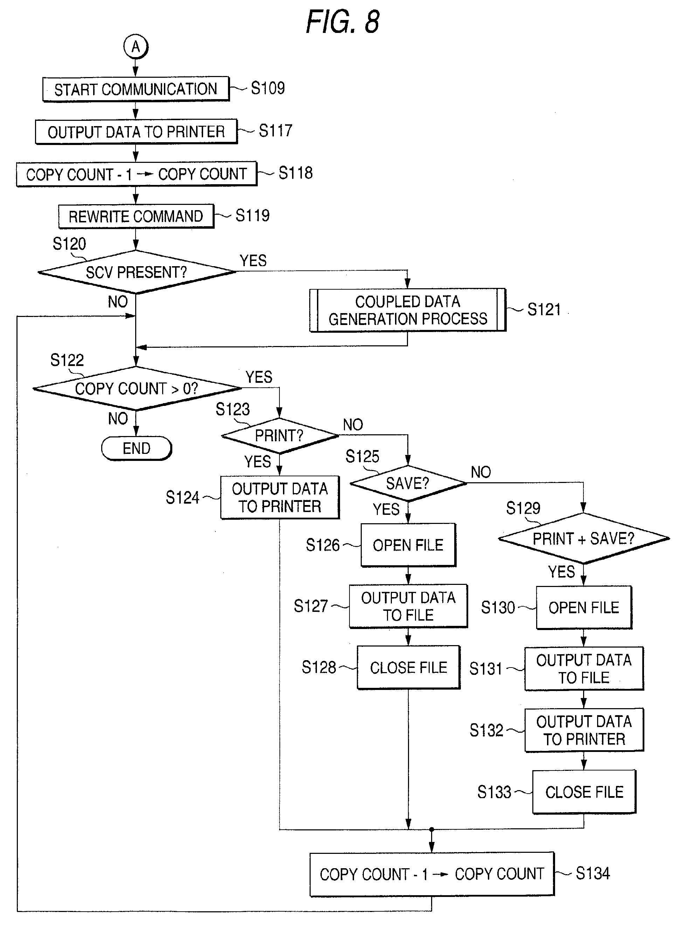

The printer driver process at S50 will now be described with reference to flowcharts shown in Figs. 7 and 8. The printer driver process is begun when data for use by the printer driver 50 are entered by the universal printer driver 33. The input data includes data representing the number of copies to be printed, the custom option data that are set on the screen shown in Fig. 5, the original image data, and various other command data. Since identification data representing the message type of the input data are added at the head of the data, the printer driver 50 can identify the message type by referring to the identification data. The number of copies to be printed represents the total number of the original receipt and the journal copy that are to be printed. The user can set an arbitrary value for the number of copies to be printed. Generally, one original receipt and one journal copy are printed as a single set. Thus, "2" may be provided as the default number of copies to be printed.

When data from the universal printer driver 33 is entered (S101), the printer driver 50 identifies the message type of the input data by examining the identification data (S102), and consonant with the message type that is identified, one of the processes at S103 to S109 is performed. Table 2 shows the correlation between the identification data and the message type.

**Table 2**

| identification data | message type |
|---|---|
| 0 | number of copies to be printed |
| 1 | custom option data |
| 2 | page start command |
| 3 | Y-Rel command or raster data command |
| 4 | page end command |
| 5 | document end command |

Generally, data from the universal printer driver 33 are entered in a predetermined order. This embodiment assumes that data are entered in a predetermined order.

When the set count data representing the number of copies to be printed is entered (S101 and S102: "01"), the set count data are stored as a predetermined variable in the RAM 16 (S103) and the process then returns to S101. Thereafter, when custom option data are entered (S101 and S102 "1"), the custom option data are stored at a predetermined location in the RAM 16 (S104), and a static raster command is stored in the original buffer (S110). The static raster command, which is inevitably required for printing, includes a command for changing the printer to the raster printing mode. Next, the custom option data are converted into printer commands and are sequentially stored in the original buffer. That is, as commands for the original receipt, the reverse paper feed command, the page end cutting operation command and the document end cutting operation command shown in Table 1, are stored in the original buffer (S111, S112 and S113). Then, as commands for the journal copy, the reverse paper feed command, the page end cutting operation command and the document end cutting operation command are stored as predetermined variables in the RAM 16 (S114, S115 and S116). The process is thereafter returned to S101.

The page start command representing the head of a page is entered (S101 and S102: "2") and is stored in the original buffer (S105), and the process is returned to S101. Then, the Y-Rel commands and the raster data commands included in the original image data are sequentially entered. When it is determined that input data is a Y-Rel command (S101 and S102: "3"), the Y-Rel command is stored in the original buffer (S107). When it is determined that the input data is a raster data command (S101 and S102: "3"), the raster data command is stored in the original buffer (S106) and the process is returned to S101. The processes at S106 and S107 are repeated until all the Y-Rel commands and the raster data commands for one page are stored in the original buffer. After the page end command representing the page end is entered (S101 and S102: "4"), the page end command is stored in the original buffer (S108) and the process is returned to S101.

In case where the document includes multiple pages, the processes at S105 to S108 are repeated, and when the document end command representing the end of a document is entered (S101 and S102: "5"), the process advances to S109 (Fig. 8) and communication with the printer 20 is initiated. Thereafter, the data stored in the original buffer are output to the printer 20 (S117), and the original receipt is printed. At this time, together with the original image data, the page end cutting operation command and the document end cutting operation command for the original receipt are also output to the printer 20. Thus, the printer 20 can perform the cutting operation in accordance with the setup entered by the user.

Thereafter, the number of copies to be printed is updated by decrementing by one the value representing the number of copies to be printed, which is stored in the RAM 16 as a predetermined variable (S118). At step S119, the commands for the original copy that are stored in the RAM 16 at S114 to S116 are stored in the original buffer and are replaced by the commands for the original receipt stored in the original buffer, i.e., the reverse paper command, the page end cutting operation command and the document end cutting operation command.

At S120, a check is performed to determine whether "SCV", for the SCV image option is selected. If "SCV" is selected (YES at S120), the coupled image data generation process is performed (S121) and the process is advanced to S122. During the coupled image data generation process, the coupled image data are generated, based on the original image data and the SCV image data, and are stored in the coupled image buffer. If "no SCV" is selected (NO at S120), the process is advanced to S122, and when the number of copies to be printed > 0 (YES at S122), program control is advanced to S123.

At S123, a check is performed to determine whether "printing" is selected for the copy output option. If "printing" is selected (YES at S123), all the commands stored in the original buffer or the coupled image buffer (hereinafter referred to as a "buffer") are output to the printer 20 (S124). At this time, together with the image data command, the page end cutting operation and the document end cutting operation command for the journal copy are also output to the printer 20. Thus, the printer 20 prints the journal copy and executes the cutting operation in accordance with the setup entered by the user. The process is thereafter advanced to S134.

If "save" is selected for the data output option (NO at S123 and YES at S125), the journal file is opened (S126), and the data stored in the buffer are stored in the journal file (S127). Thereafter, the journal file is closed (S128) and the process is advanced to S134.

If "print + save" is selected for the data output option (NO at S123, NO at S125 and YES at S129), the journal file is opened (S130), and the data in the buffer are stored in the journal file (S131). The contents of the journal file are then output to the printer 20 (S132) and the journal copy is printed. Thereafter, the journal file is closed (S133) and the process advances to S134. At S134, the number of copies to be printed is updated by decrementing this value by one and the process is returned to S122. Then, when the number of copies to be printed ≤ 0 (NO at S122), the process is terminated.

As above described, according to this embodiment, immediately after printing of the receipt, the printer either can print the journal copy or can temporarily store it in the file and print it as needed. Therefore, duplicate printing is available without using two-page forms. Further, since a predetermined message can be inserted into the journal copy as needed, the journal copy and the original receipt can be easily identified. In addition, since the cutting operation at the page end or at the document end can be independently selected for the original receipt and for the journal copy, a different cutting operation can be employed, such as full cutting at the document end of the original receipt or partial cutting at the document end of the journal copy.

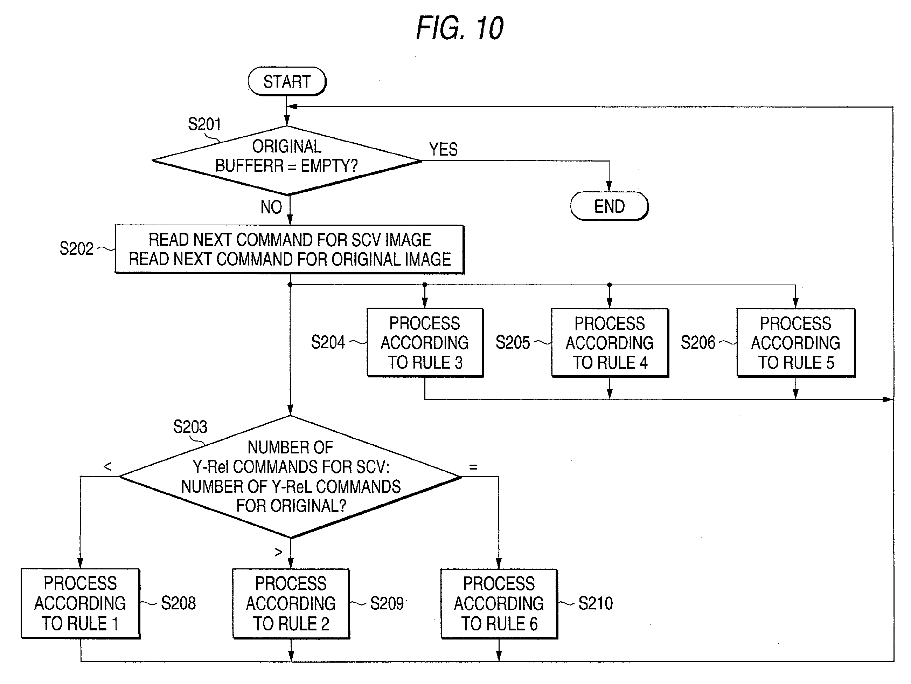

The coupled image data generation processing at S121 will now be described with reference to Fig. 9 and a flowchart shown in Fig. 10. During this processing, the original image data are coupled with the SCV image data, and the obtained image data are stored in the coupled image buffer. The SCV image data are stored in advance in the SCV buffer and the original image data are stored in the original buffer at S104.

During the data coupling process, the first command for the original image data is sequentially coupled with the first command for the SCV image data. At this time, rules 1 to 6 are employed in accordance with the combination of the commands that are to be coupled. The individual rules will now be described.

In the example in Fig. 9, the first command for the SCV image data is a Y-Rel command, while the first command for the original image data to be coupled with it is a raster data command. In this case, rule 3 is employed to couple the Y-Rel command in the SCV image data with the raster data command in the original image data. According to rule 3, first, the raster data command in the original image data is output to the coupled image buffer and is deleted from the original buffer. Then, the number of Y-Rel commands in the SCV image data is updated by decrementing it by one. The program is designed so that when the number of Y-Rel commands reaches zero, the Y-Rel command is automatically deleted.

In case where the first command in the SCV image data is a raster data command and the first command in the original image data is a Y-Rel command, rule 4 is employed for their coupling. According to rule 4, the raster data command in the SCV image data is output to the coupled image buffer and is deleted from the SCV buffer. Then, the number of Y-Rel commands added to the Y-Rel command of the original image data is updated by decrementing it by one.

Rule 5 is employed when coupling raster data commands. According to rule 5, two raster data commands are OR-coupled and the result is output to the coupled image buffer, while the raster data commands that are coupled are deleted from the SCV buffer and the original buffer.

To couple the Y-Rel commands, rule 1, rule 2 or rule 6 is employed pursuant to the number of Y-Rel commands. That is, when the number of Y-Rel commands for the SCV image data is smaller than the number of Y-Rel commands for the original image data, rule 1 is employed. When the number of Y-Rel commands for the original image data is smaller, rule 2 is employed. And when the number of Y-Rel commands is the same for both sets of data, rule 6 is employed.

According to rule 1, the Y-Rel command for the SCV image data is output to the coupled image buffer and is deleted from the SCV buffer. Then, the value obtained by subtracting the number of Y-Rel commands for the SCV image data from the number of Y-Rel commands for the original image data is employed as the updated number of Y-Rel commands for the original image data.

According to rule 2, the Y-Rel command for the original image data is output to the journal buffer and is deleted from the original buffer. Then, the value obtained by subtracting the number of Y-Rel commands for the original image data from the number of Y-Rel commands for the SCV image data is employed as the updated number of Y-Rel commands for the SCV image data.

According to rule 6, a Y-Rel command for the SCV image data in the coupled image buffer is output and is deleted from the SCV buffer. This Y-Rel command is also deleted from the original buffer.

The coupled image data generation processing is actually performed as shown in the flowchart of Fig. 10. When the processing is initiated, a check is performed to determine whether the original buffer (S201) is empty. When it is determined data are present (NO at S201), the commands for the SCV image data and for the original image data are read (S202). If the commands for the SCV image data and the original image data are respectively a Y-Rel command and a raster command, at S204 the process according to rule 3 is performed, while if the commands are respectively a raster data command and a Y-Rel command, at S205 the process according to rule 4 is performed. When, however, both commands are raster data commands, rule 5 is applied for processing performed at S206. Further, in the event both commands are Y-Rel commands, program control advances to S203 and, pursuant to the number of Y-Rel commands remaining, rule 1, 2 or 6 is applied for the processing performed at S208, S209 or S210. Following each of the foregoing examples, program control is returned to S201 and the processing in Fig. 10 is repeated until all data have been deleted from the original buffer. Then, when it is determined the original buffer is empty (YES at S201), program control is shifted to S122 in Fig. 8 and corresponding processing is performed.

The printer driver according to the invention is not limited as herein described, and within the scope of the claims of the invention, can be variously modified or improved. Further, the printer that may be used is not limited to the thermal printer as herein described. Another printer, such as a dot-matrix printer, may be employed instead.

The message image is not limited to "Second Copy - Void". Another message can be employed and the size and the position of the message can also be determined arbitrarily. Since the raster data commands are OR-coupled, even when the original image and the message image are partially overlapped, the coupling of data can be performed with no problem.

In this embodiment, the issuance of a transaction receipt and the printing of a journal copy are explained. The present invention is not limited to these forms. The number of copies is not limited to two, and only one, or a number equal to or greater than three, may be prepared.

According to the printer driver of the first aspect, since the coupling means of the printer driver adds the message data to the original data, no change is required for the application installed in the host computer or the printer. Further, since the coupled data is prepared by combining predetermined message data with the original data, an original image based on the original data and a coupled image based on the coupled data can be correctly and easily identified.

According to the printer driver of the second aspect, the coupled data are output to the printer with the original data to print a copy. Thus, duplicate printing can be performed without using two-page forms. Therefore, duplicate printing is available with a printer, such as a thermal printer, that does not accept two-page forms. In addition, from a coupled image that is based on the coupled data, an original image that is based on the original image data can be correctly and easily identified. Moreover, since the coupled data can be stored in the memory, the coupled data can be printed as needed, rather than being printed at the time of each transaction.

According to the printer driver of the third aspect, since the paper cutting operation for the original printing and copy printing can be selected for each page and for each document, an arbitrary cutting operation desired by the user can be designated. Therefore, when copy printing is to be performed after the original printing is completed, and when full cutting at the document end is selected for the original printing and partial cutting at the document end is selected for the copy printing, the user can more easily identify an original sheet and a copy.

## Claims

1. A printer driver for use with a host computer, the printer driver comprising:
reception means for receiving original data;
storage means for storing message data; and
coupling means for coupling the original data with the message data to prepare coupled data.

2. The printer driver as claimed in claim 1, further comprising:
selection means for outputting the original data to a printer connected to the host computer and for selectively outputting the coupled data to the printer or to a memory of the host computer.

3. The printer driver as claimed in claim 1 or claim 2, further comprising:
setting means for setting up a paper-cutting operation; and
output means for outputting the original data or the coupled data to the printer together with a command for the paper-cutting operation that is set up by the setting means,
wherein the setting means sets up the paper-cutting operation for each of an original printing and a duplicate printing on each page basis and on each document basis, and
the paper-cutting operation includes a full-cut operation and a partial-cut operation.
